# EUROPEAN PATENT SPECIFICATION

(11) **EP 4 419 278 B1**
(45) Date of publication and mention of the grant of the patent: **16.09.2026**
(21) Application number: 21820682.9
(22) Date of filing: 21.10.2021
(51) Int. Cl.: B23B 7/02, B23B 13/02, B23B 13/12

(54) **SUPPORT DEVICE FOR A LATHE**
STÜTZMITTEL FÜR EINE DREHMASCHINE
OUTIL DE SUPPORT POUR UN TOUR

(43) Date of publication of application: 28.08.2024
(73) Proprietor: Omt Bonetto S.r.l., 35010 Arsego di San Giorgio delle Pertiche (IT)
(72) Inventor: BONETTO, Federico, 35011 Campodarsego (PD) (IT)
(74) Representative: Morabito, Sara
(86) International application number: PCT/IB2021/059707
(87) International publication number: WO 2023/067375

(56) References cited:
- EP-A1- 0 462 322
- IT-A1- 201900 017 042

## Description

The present invention relates to a support device for a lathe, in particular of the type that can be combined with a spindle of a lathe.

The invention also relates to a lathe on which said support device is installed.

The lathe is a machine tool mainly used to shape metal (or sometimes wood or other materials) components by having the component being machined supported and rotated by a spindle while a tool causes the cutting action. The lathe can be used to produce threads, conical machining, holes, knurled surfaces, etc. Modern lathes may possibly comprise means for controlling the speed of rotation of the component and/or means for manually or automatically displacing the cutting tool on the component to be machined.

The main function of the lathe spindle is to support and rotate the component to be machined. There are various types of spindles: for example, they can be of the four-jaw type, three-jaw type, combined type, magnetic type, collet type, pneumatically or hydraulically operated, etc.

A typical problem in the prior art is related to oscillation of the component being machined on the lathe, particularly in the turning area of the lathe. In order to limit oscillation, it may be necessary to reduce the rotation speed imposed on the component by the lathe during machining, resulting in a reduction in productivity.

In the case of a bar lathe, where the component to be machined is configured as a bar with predominantly longitudinal extension, the problem can be further accentuated. These bars are usually pushed into a hollow shaft of a lathe spindle by means of a device called bar pusher or bar loader. Said bar pushing device is generally provided with a support system for the portion of the bar outside said hollow shaft. The bar is advanced inside the hollow shaft of the spindle as it is machined. Inside said hollow shaft, the bar is no longer effectively supported by said support systems and this can cause poor stability and oscillations of the component during machining. One way of limiting oscillations can be to use support devices adapted to cooperate with the lathe spindle. However, current support devices are not able to reduce oscillations sufficiently.

Another problem of the support devices of the prior art is linked to the setup times of the lathe, in particular to the setup times for the replacement or adjustment of the support device. In fact, in order to contain the oscillation it could be necessary to interrupt the machining and replace and/or adjust the support device as the cross section of the component varies, even minimally.

IT 2019 0001 7042 A1 discloses a support device according to the preamble of claim 1.

EP 0 462 322 A1 discloses displaceable hooking elements.

An object of the invention is to provide a support device for a lathe that overcomes the problems complained of with reference to the prior art mentioned above.

An object of the invention is to provide a support device for a lathe which makes it possible to limit or eliminate the oscillations to which the component being machined on the lathe is subjected.

Another object of the invention is to provide a support device for a lathe that enables the speed of rotation of the component being machined on the lathe, and thus the productivity to be increased.

A further object of the invention is to significantly improve the geometric and dimensional quality of the components machined by the lathe subject-matter of the invention.

Another object of the invention is to improve the reliability of the lathe by reducing the wear of the tools.

A further object of the invention is to reduce or eliminate lathe set-up times by reducing staff presence during machining.

These and other objects are solved by a support device for a lathe having the characteristics of claim 1 and by a lathe made according to claim 14.

According to a first aspect of the invention, a support device according to claim 1 is provided which can be coupled to a spindle of a lathe.

Advantageously, the spindle and the support device hook different portions of the component, so that a synergistic effect is achieved, which helps to reduce the oscillations of the component while hooking and supporting said component during the machining on the lathe. This is particularly useful for particularly heavy components, for which the gripping elements of the lathe spindle alone would not be sufficient.

Preferably, the support group is intended to hook and support a portion of the component longitudinally spaced apart with respect to the portion of the piece hooked by the spindle. Advantageously, by hooking the component in two different portions, i.e. one portion by means of the support device and another portion by means of the lathe spindle, it is possible to limit or eliminate the oscillations to which the component being machined is subjected on the lathe. Preferably, the distance between said portions of the component is such as to guarantee this limitation or cancellation of the oscillations. For example, if the support device comprises only one support group, the portion of the component hooked by said support group is on the opposite side with respect to the portion hooked by the spindle.

Advantageously, the longitudinal axis of the support device is substantially coincident with a spindle axis of the lathe spindle when the support device is coupled to said lathe.

The hooking elements advantageously converge towards the longitudinal axis of the support device when they are displaced from the rest position to the operating position. In this way it is possible to eliminate the play between the hooking elements and the component in a satisfactory manner. This also makes it possible to reduce or completely eliminate the problem of the vibrations due to component oscillations due to said play.

Conversely, each hooking element, when moved by the transmission from the operating position to the rest position, preferably returns to its respective seat. In this way, the component can be advantageously made to slide longitudinally into the cavity of the support group.

By means of the support device which is the subject-matter of the invention, it is therefore possible to reduce or eliminate the play between the component to be machined and the support device itself. Furthermore, said support device can advantageously adapt automatically to the cross section of the component to be machined.

Preferably, each hooking element is rotatable on a respective element axis, each element axis being substantially parallel to the longitudinal axis of the support device and being spaced apart from said longitudinal axis.

Preferably, each hooking element comprises a first end and a second end which are opposite each other. Advantageously, when the hooking element is in the operating position, the first end is in the cavity of the body of the support group while the second end does not protrude into said cavity. Preferably, each element axis passes through a portion of the respective hooking element. Advantageously, said portion is located near the second end of said hooking element. In this way it is possible to obtain a movement that allows the hooking elements to protrude into the cavity of the support group, in the operating position, and to return to their respective seats, in the rest position.

Advantageously, the element axes of the hooking elements are equidistant from the longitudinal axis of the support device along the radial direction. This allows to facilitate a simultaneous movement of said hooking elements.

Advantageously, the transmission comprises a crown and a pinion. Preferably, the crown is mounted on the body of the support group. Advantageously, the crown is actuatable by the pinion. Preferably, the pinion is in turn actuatable by means of the gearmotor. Advantageously, the crown is adapted to move the hooking elements between the operating position and the rest position.

This transmission allows to obtain a particularly effective displacement of the hooking elements between the rest position and the operating position so as to obtain a particularly uniform grip on the component to be turned.

Preferably, each hooking element is connected to the crown by means of a respective plug. Advantageously, the rotation of the crown displaces each plug in a respective track obtained on the body of the support group. Preferably, the displacement of said plug moves the respective hooking element between the rest position and the operating position.

The use of a plug sliding in a track allows to obtain a particularly uniform movement of the hooking elements between the operating position and the rest position. Depending on the shape of the track, it is possible to impart a certain movement to the hooking elements between the rest and operating positions.

Advantageously, the crown comprises a slot adapted to receive the plug combined with each hooking element. Preferably, the slot is shaped to allow the plug to move along the radial direction of the support device.

Depending on the shape of the slot, it is possible to additionally impart a certain movement to the hooking elements between the rest and operating positions. For example, each hooking element, between the rest position and the operating position, performs a movement consisting of: rotation around its element axis, displacement of its element axis along the direction defined by the track obtained on the body and translation in the radial direction of its own element axis in the slot.

Advantageously, the crown comprises a blocking portion adapted to limit the longitudinal movement of the plug along the longitudinal axis of the support device.

Preferably, the support group comprises a further crown mounted on the body of the support group and opposite to the crown with respect to said body of the support group, each crown being actuatable by the pinion.

By using two opposite crowns, it is advantageously possible to achieve a particularly effective movement of the hooking elements. Thanks to the two opposite crowns, it is advantageously possible to stress two ends of the plug substantially simultaneously. This ensures that the plug itself is not unbalanced and that the movement of the hooking elements obtained is particularly smooth.

Preferably, the hooking elements are positioned in the body so as to be equidistant from each other.

Equidistant means that successive hooking elements are advantageously spaced apart by the same first angle. Preferably, successive hooking elements means circumferentially successive hooking elements.

Advantageously, the hooking elements have a hook shape.

Said shape allows a particularly firm grip of the component. In other embodiments, hooking elements can be advantageously provided for with a cam, tooth shape, etc.

Preferably, the hooking elements have the same shape and size. This allows the component to be hooked more securely.

Preferably, each seat of the body of the support group has a shape complementary to that of the respective hooking element.

This prevents a portion of the hooking elements from protruding into the cavity of the body of the support group and thus facilitates the passage of the component in said cavity. Furthermore, said complementary shape can be useful for making the support group more compact, limiting the transverse extension of the body of the support group. Said transverse extension must in fact be contained because it cannot exceed the transverse extension of the hollow shaft of the spindle of the lathe on which the support device is mounted.

Advantageously, the support device comprises a plurality of support groups spaced apart along the longitudinal axis of the support device and a spacer interposed between two successive support groups and coupled to said two successive support groups. Advantageously, said spacer comprises a body extending along the longitudinal axis and having a cavity adapted to receive the component to be machined.

In a preferred embodiment, the support device comprises a plurality of support groups. Preferably, there are at least two support groups to support the component to be turned in at least two mutually distinct portions. Advantageously, the support groups are aligned along the longitudinal axis of the support device. Preferably, each support group is adapted to support a different portion of the component to be machined. This allows to further limit the oscillations of the component, since a plurality of portions of said component are constrained by means of the support device. This improves the stability of the component during turning machinings.

Advantageously, the main function of the spacers is to connect and space apart two successive support groups from each other. Advantageously, the spacers allow to make the support device modular: on the basis of the longitudinal extension of the hollow shaft of the spindle, a suitable number of spacers can be inserted between successive support groups.

Advantageously, the cavity of the spacer body has a transverse extension substantially corresponding to that of the cavity of the body of the support group.

It is advantageously possible to use different support groups on the same support device, in particular if the component to be machined on the lathe comprises portions having cross sections with different diameters between them.

Preferably, the body of the spacer 6 is adapted to support the transmission, in particular the pinion of the transmission.

Preferably, the support device comprises an interface device adapted to interact with an electronic control system of the lathe so as to control the movement of the hooking elements on the basis of the diameter of the cross section of the component to be machined on the lathe. Advantageously, the electronic control system of the lathe is adapted to control the actuation of the gearmotor.

The interface device allows an easy connection to be made between the support device and the electronic control system of the lathe.

Preferably, the electronic control system of the lathe, when the spindle gripping elements are moved away from the component, commands the hooking elements of the support group to displace to the rest position. Advantageously, the electronic control system of the lathe, when the spindle gripping elements are moved towards the component so as to hook a portion thereof, commands the displacement of the hooking elements of the support group into the operating position.

Preferably, the support device comprises a movement device adapted to configure the support device in a distancing configuration, in which the gearmotor is not connected to the pinion, and a nearing position, in which the gearmotor is connected to the pinion.

Preferably, the movement device is included in the assembly. Advantageously, the movement device comprises a plate, a movement element and a guide bar.

The assembly preferably comprises a first flange. Preferably, the first flange is adapted to connect the support group to the assembly. Preferably, in the nearing position, the first flange cannot be brought into rotation by the spindle, whereas in the distancing position, the first flange can be brought into rotation by the spindle. Advantageously, it is possible to control the movement device by means of the electronic control system of the lathe.

Preferably, the support device comprises a blocking device adapted to block the rotation of the pinion, when the support device is in the distancing configuration, and to allow the rotation of the pinion, when the support device is in the nearing configuration.

When the support device is configured in the distancing position, the end of the pinion that was previously connected to the gearmotor is free. It may happen that said free end turns idle due to the stresses of the lathe and in some cases there may also be a loosening of the grip of the hooking elements on the component. To solve this problem, the blocking device advantageously blocks the rotation of the pinion when the support device is configured in the distancing position.

Preferably, the support device comprises a clutch device adapted to make the gearmotor slip after the hooking elements come into contact with the component to be machined on the lathe. Advantageously, the gearmotor is deactivated after a certain period of time has elapsed since the gearmotor starts slipping.

The clutch device advantageously allows to adapt the excursion of the hooking elements on the basis of the diameter of the cross section of the component to be turned, so as to obtain zero play between said component and said hooking elements. The clutch device advantageously prevents the support device from undergoing damage caused by failure to hook a component to be turned: said failed hooking may for example be due to a cross section of said component having an effective diameter different from the nominal diameter, for example due to inaccurate manufacturing tolerances. Advantageously, it is possible to control the clutch device by means of the electronic control system of the lathe.

According to another aspect of the invention, there is provided a lathe according to claim 14, comprising a support device according to the invention and a spindle adapted to hook and support a portion of the component longitudinally spaced apart with respect to the portion of the piece hooked by the support group. Advantageously, the spindle and the support device hook different portions of the component, so that a synergistic effect is achieved, which helps to reduce the oscillations of the component while hooking and supporting said component during the machining on the lathe. Advantageously, by hooking the component in two different portions, i.e. one portion by means of the support device and another portion by means of the lathe spindle, it is possible to limit or eliminate the oscillations to which the component being machined is subjected on the lathe. Preferably, the distance between said portions of the component is such as to guarantee this limitation or cancellation of the oscillations.

Preferably, said lathe is of the parallel or bar type. Advantageously, the lathe is of the numerically controlled type. Advantageously, it is possible to combine the support device with the lathe by retrofitting.

Advantageously, the lathe comprises a bar pushing device adapted to insert the component to be machined in the support device coupled to the lathe.

The bar pushing device is advantageously used in the case in which the lathe is a bar lathe.

The characteristics and advantages of the invention will become clearer from the detailed description of an embodiment shown, by way of non-limiting example, with reference to the appended drawings wherein:

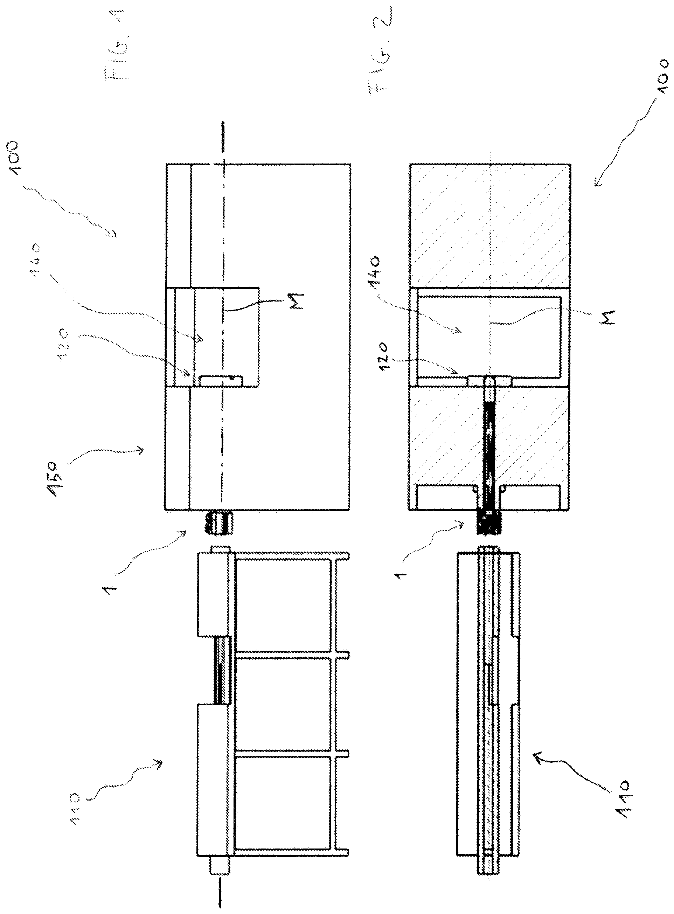

figure 1 is a side view of a lathe on which the support device is mounted;
figure 2 is a longitudinal section of the lathe on which the support device is mounted;

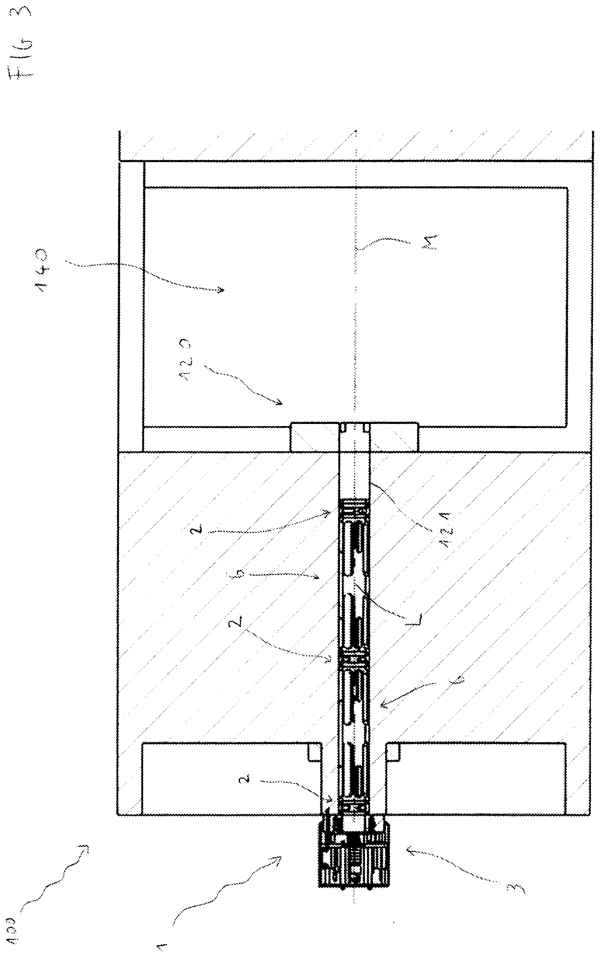

figure 3 is an enlargement of the previous figure at the support device mounted on a lathe spindle;

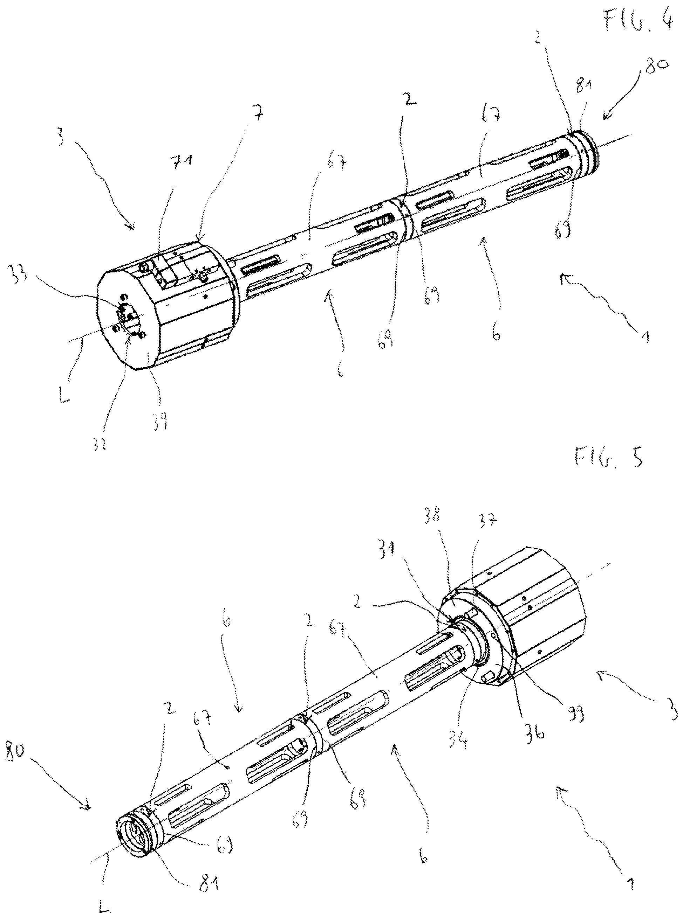

figures 4 and 5 are two perspective views of the support device;

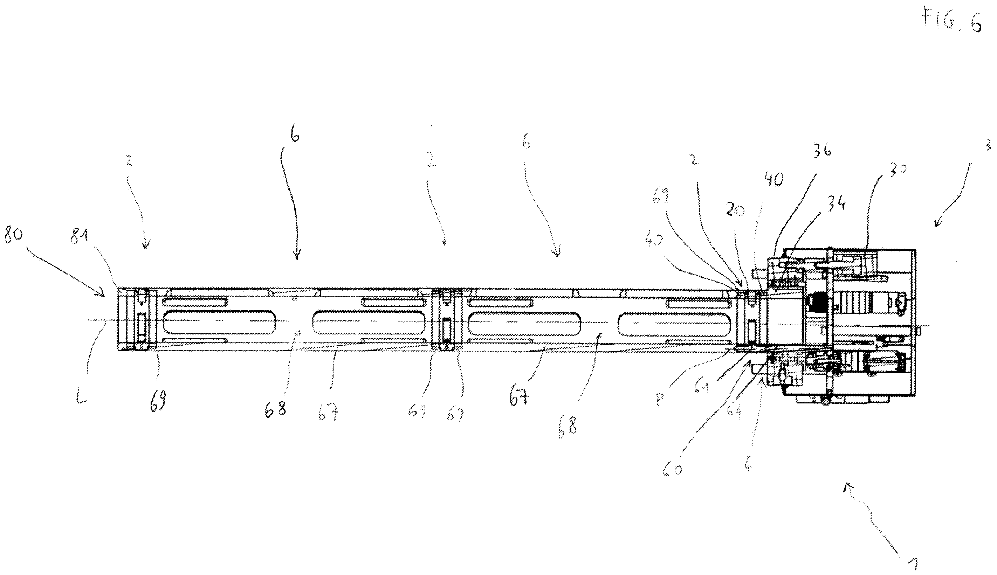

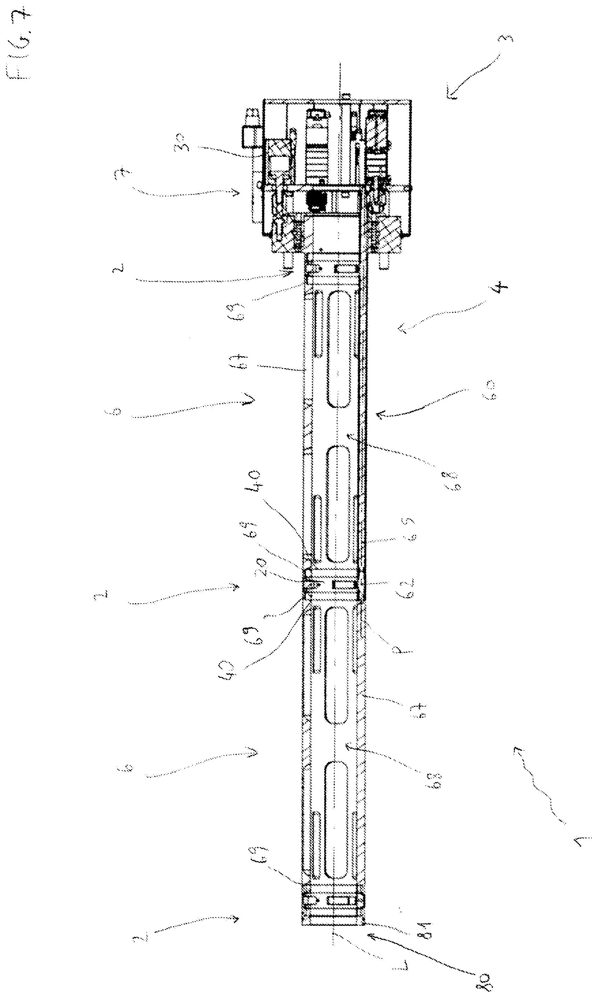

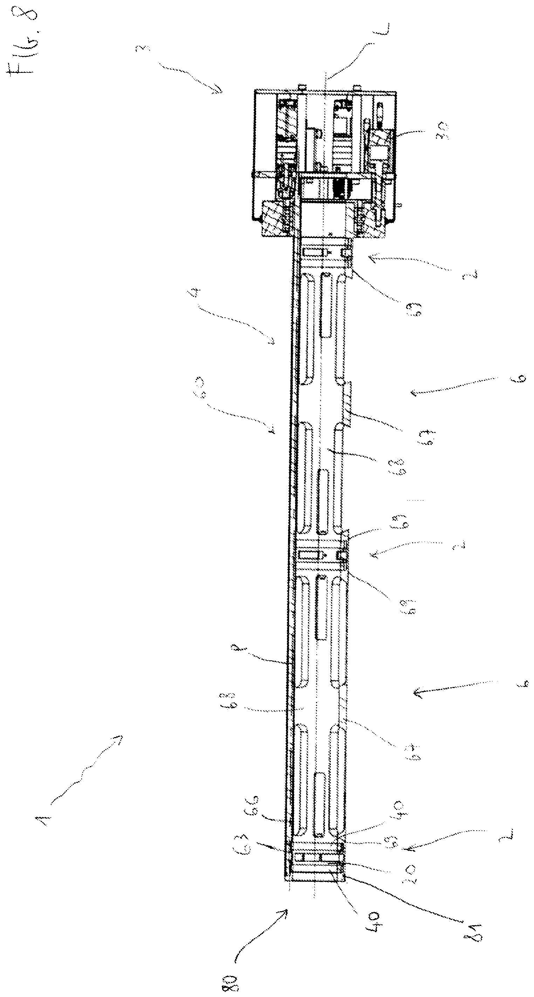

figures 6, 7 and 8 are longitudinal sections at the respective pinions of the transmission;

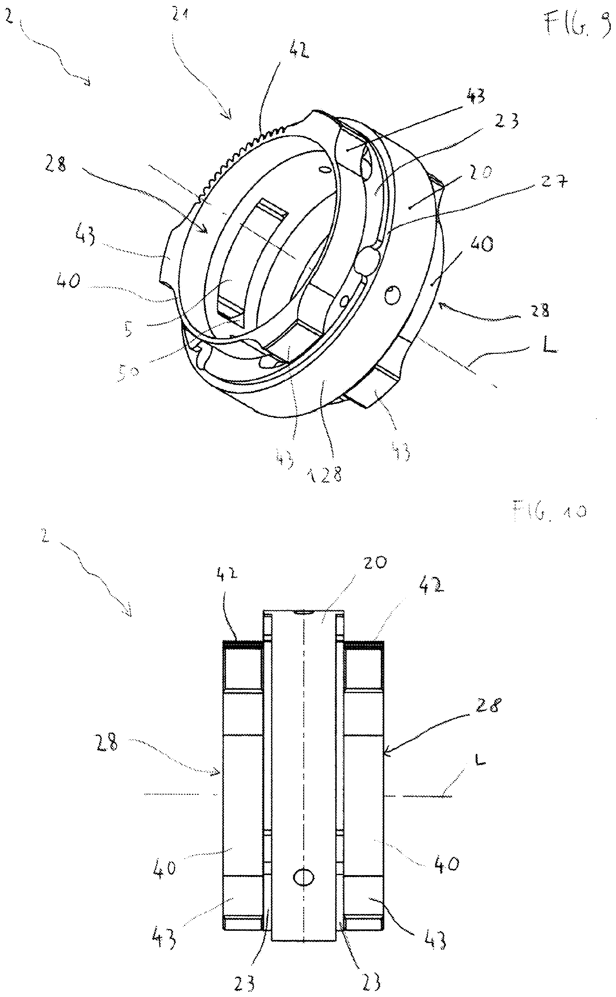

figures 9 and 10 are respectively a perspective view and a side view of a support group of the support device;

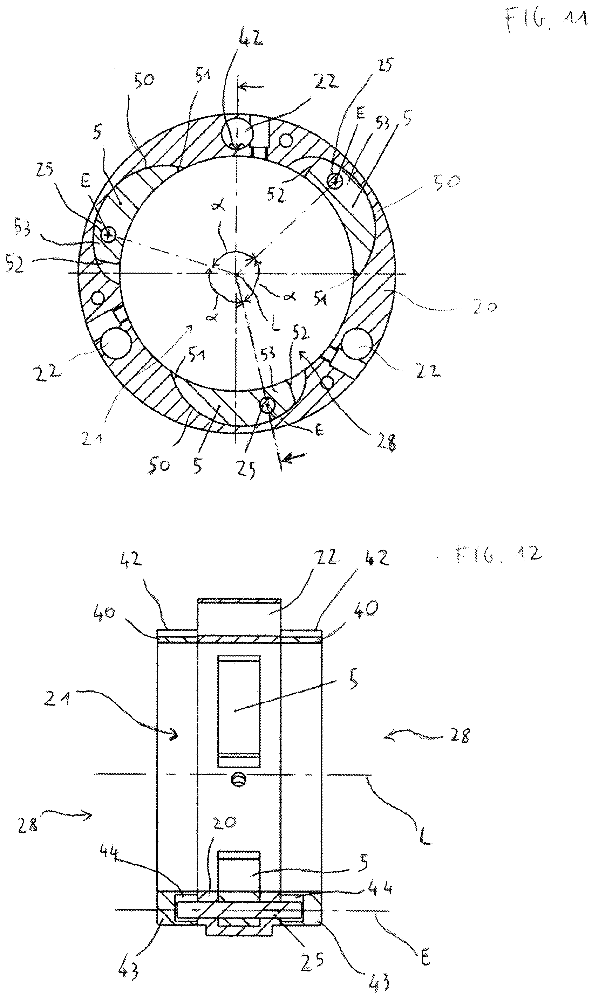

figure 11 is a cross section at one body of the support group;
figure 12 is a longitudinal section and along an element axis of a hooking element of the support group;

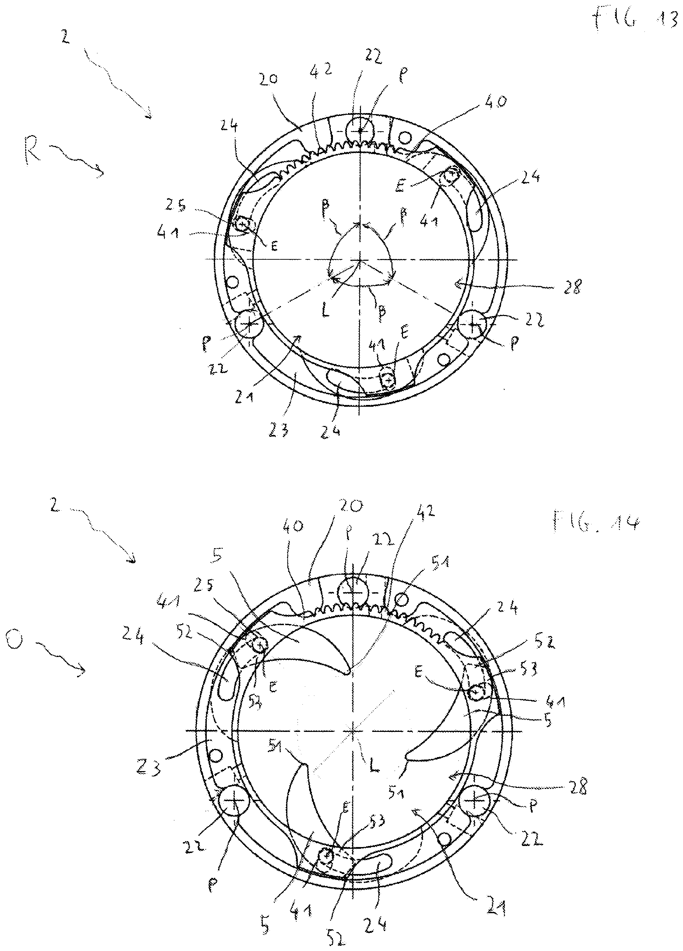

figures 13 and 14 are a cross section at a crown mounted on the support group, with support elements of said support group respectively in the rest position and in the operating position;

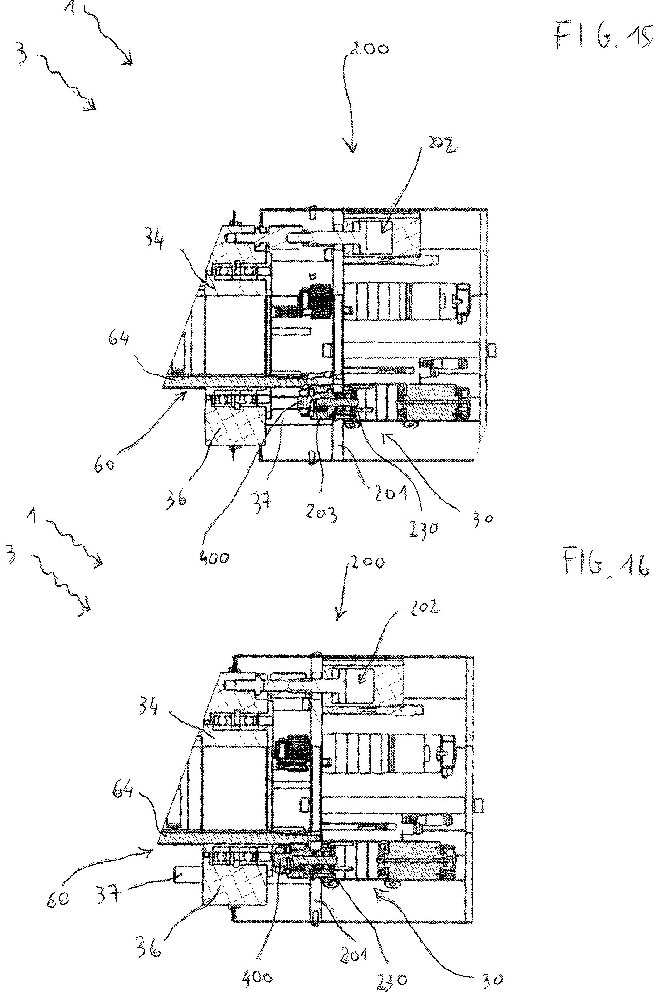

figures 15 and 16 are a longitudinal section of the support device in a distancing and in a nearing configuration, respectively;

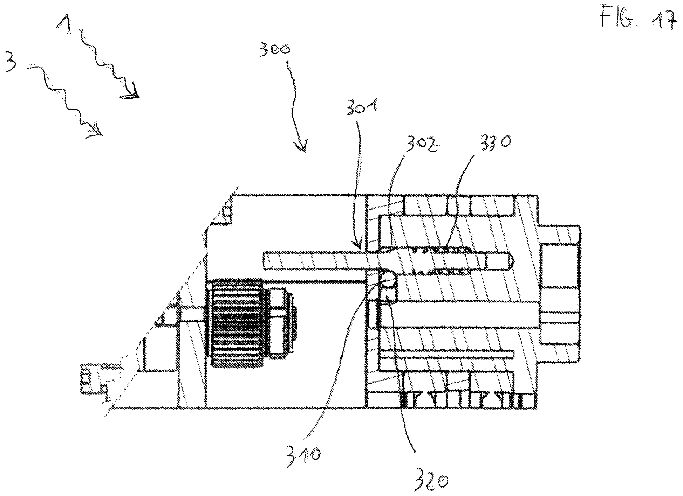

figure 17 is a longitudinal section of a blocking device of the support device.

With reference to the figures, a support device for a lathe 100 is indicated as a whole by reference number 1.

The support device 1 can be coupled to a spindle 120 of the lathe 100. The support device 1 comprises: a support group 2, an assembly 3 and a transmission 4.

The support group 2 is adapted to hook and support a component to be machined on said lathe 100.

The assembly 3 is adapted to couple the support device 1 to the lathe 100 and comprises a gearmotor 30 adapted to actuate the support group 2. Preferably, the transmission 4 is adapted to transfer the motion from the gearmotor 30 to the support group 2.

The support group 2 comprises a body 20 and hooking elements 5.

The body 20 comprises a cavity 21 adapted to receive the component and extends longitudinally so as to define two opposite and aligned inlets 28 along a longitudinal axis of the support device 1.

The hooking elements 5 can be displaced by means of the transmission 4 between a rest position R and an operating position O.

In the rest position R said hooking elements 5 are positioned in respective seats 50 obtained on the body 20 of the support group 2.

In the operating position O said hooking elements 5 are displaced outside said respective seat 50 towards the cavity 21 so as to project into said cavity 21 in order to be able to hook and support the component to be machined on said lathe 100.

Preferably, the lathe 100 comprises a turning area 140 in which the component is machined. Advantageously, the lathe 100 comprises a tool for carrying out turning operations on said component.

Preferably, the spindle 120 of the lathe 100 extends longitudinally along a spindle axis M thereof. The spindle axis M is advantageously horizontal. Preferably, the longitudinal axis L of the support device 1 is substantially coincident with the spindle axis M of the spindle 120 of the lathe 100, when the support device 1 is coupled to said lathe 100.

Advantageously, the spindle 120 comprises a hollow shaft 121. The support group 2 is preferably insertable inside the hollow shaft 121 of the spindle 120.

Preferably, the body 20 of the support group 2 has a substantially cylindrical shape.

The cavity 21 of the body 20 is advantageously limited by a closed perimeter. Advantageously, the cavity 21 of said body 20 has a substantially cylindrical shape. Preferably, the cavity 21 extends along a whole longitudinal extension of the body 20, so that the component can slide longitudinally along the body 20 of the support group 2 through said cavity 21.

Advantageously, the cross section of the body 20 of the support group 2 has a diameter substantially corresponding to that of the cross section of the cavity of the hollow shaft 121 of the spindle 120. Preferably, there are three hooking elements 5 for each support group 2.

In the rest position R, each hooking element 5 is preferably positioned in the respective seat 50, so as not to protrude into the cavity 21 of the body 20. Advantageously, the hooking elements 5 are displaced at least partially outwardly or inwardly of the seat 50 by means of the transmission 4.

Preferably, each hooking element 5, when moved by the transmission 4 from the rest position R to the operating position O, protrudes into the cavity 21 of the body 20. In this way, the hooking elements 5 can hook and support the component inserted in the cavity 21. The hooking elements 5 advantageously converge towards the longitudinal axis L of the support device 1, when they are displaced from the rest position R to the operating position O. In this way it is possible to eliminate the play between the hooking elements 5 and the component in a satisfactory manner, thereby also managing to reduce or completely eliminate the problem of vibrations due to oscillations of the component caused by said play.

Conversely, each hooking element 5, when moved by the transmission 4 from the operating position O to the rest position R, preferably returns to its respective seat 50. In this way, the hooking elements 5 are spaced away from the component, which can then slide longitudinally into the cavity 21.

Advantageously, the support group 2 is integral with the hollow shaft 121 of the spindle 120, i.e. the rotation of the spindle 120 also brings the support group 2 into rotation.

Preferably, when the hooking elements 5 are in the operating position O they cooperate with gripping elements of the spindle 120 to retain the component and bring it into rotation in a manner integral with the spindle 120 and the support group 2. In other words, in operating position O, the spindle 120, the support group 2 and the hooked component advantageously rotate integrally. Preferably, the gripping elements of the spindle 120 can be shaped for example as jaws. Advantageously, the spindle 120 and the support device 1 hook different portions of the component, so as to achieve a synergistic effect that contributes to decreasing oscillations of the component during hooking and support of said component during machining on the lathe 100. This is also particularly useful for particularly heavy components, for the support of which the gripping elements of the spindle 120 of the lathe 100 alone would not be sufficient.

The rotation for machining the component on the lathe 100 preferably takes place around the spindle axis M of the spindle 120, i.e. around the longitudinal axis L of the device 1.

The support group 2 is preferably connected to the assembly 3. The assembly 3 advantageously interfaces with a driving head 150 of the lathe 100. The assembly 3 advantageously has a substantially tubular shape, even more preferably with a circular or regular polygon cross section. The assembly 3 extends preferably along the longitudinal axis L of the support device 1.

Preferably, the assembly 3 interfaces with the driving head 150 of the lathe 100 on the opposite side with respect to the turning area 140. Preferably, the assembly 3 comprises a first surface 38 in proximity to the driving head 150 of the lathe 100. Advantageously, the assembly 3 encounters the driving head 150 of the lathe 100, at said first surface 38. The support group 2 is preferably connected to the assembly 3 in proximity to said first surface 38. Advantageously, the first surface 38 is substantially orthogonal to the longitudinal axis L of the support device 1.

Advantageously, the assembly 3 comprises a hole 33. Said hole 33 preferably extends along the longitudinal axis L of the support device 1. The hole 33 advantageously comprises a first opening 31 located near the first surface 38. Said hole 33 is preferably cylindrical in shape. In some embodiments, the hole 33 may advantageously extend along a whole longitudinal extension of the assembly 3, so as to pass through. In this case, the hole 33 preferably comprises a second opening 32, opposite the first opening 31. Preferably, said second surface 39 of the assembly 3 is parallel to the first surface 38 and opposite to said first surface 38 with respect to the assembly 3.

The assembly 3 preferably comprises a first flange 34 positioned in proximity to the first opening 31 of the hole 33. Advantageously, the first flange 34 is set up according to the type of lathe 100 on which the support device 1 is to be mounted so as to be at least partially insertable within the hollow shaft 121 of the spindle 120. Advantageously, the first flange 34 is brought into rotation by the spindle 120. Preferably, the first flange 34 is adapted to connect the support group 2 to the assembly 3. Advantageously, the transverse extension of the first flange 34 substantially corresponds to that of the body 20 of the support group 2. Preferably, the first flange 34 is cylindrical in shape. Preferably, the first flange 34 is adapted to align the support device 1 to the lathe 100, so that the longitudinal axis L of the support device 1 is substantially coincident to the spindle axis M. The first flange 34 allows to obtain an easy connection between support device 1 and lathe 100.

The assembly 3 preferably comprises a second flange 36 adapted to interface the support device 1, in particular the assembly 3, to the lathe 100. Advantageously, the second flange 36 comprises the first surface 38. Advantageously, the second flange 36 is adapted to connect the assembly 3 to a bearing structure of the lathe 100. Preferably, said bearing structure is located in proximity to one end of the spindle 120. Advantageously, said bearing structure interfaces with a flange of the spindle 120 present on said end. The second flange 36 is preferably connected to the bearing structure by means of threaded connections. Advantageously, said bearing structure is not integral with said spindle 120 and is not brought into rotation by said spindle 120; consequently, said second flange 36 is not brought into rotation by said spindle 120. Preferably, the second flange 36 is adapted to align the support device 1 to the lathe 100, so that the longitudinal axis L of the support device 1 is substantially coincident to the spindle axis M. The second flange 36 allows to obtain an easy connection between support device 1 and lathe 100.

Preferably, the assembly 3 comprises bearings interposed between the first flange 34 and the second flange 36, so that the first flange 34 is rotatable with respect to the second flange 36.

Preferably, the connection between assembly 3 and lathe 100 is obtained by means of threaded connections which can be inserted into holes 99 advantageously made on the assembly 3, even more preferably on the second flange 38. Advantageously, there are at least two of said holes 99.

Advantageously, the support device 1 comprises an end part 80 connected to the support group 2 on the opposite side with respect to the first flange 34. Preferably, the end part 80 comprises a groove adapted to receive a contact element 81. Said contact element 81 is advantageously configured as a gasket or bushing. Preferably, the contact element 81 is in direct contact with the hollow shaft 121 of the spindle 120, so as to avoid that the support group 2 is in direct contact with the hollow shaft 121 of the spindle 120. This allows to avoid possible damages due to rubbing between the support group 2 and the spindle 120. Preferably, the end piece 80 helps to further limit the vibrations of the support device 1. Preferably, the component extends predominantly longitudinally along a longitudinal axis thereof. Advantageously, said longitudinal axis is substantially coincident with the longitudinal axis L of the support device 1, when the component is hooked and supported by the support device 1. Preferably, the component has a round or hexagonal cross section. Advantageously, the cross section of the cavity 21 of the body 20 of the support group 2 has a larger diameter than that of a cross section of the component. Advantageously, this allows the component to slide longitudinally along the support group 2 through said cavity 21.

The cavity 21 of the body 20 of the support group 2 is preferably adapted to receive at least a portion of the component.

Preferably, the support group 2 is adapted to hook and support a component having a cross section with a diameter comprised between a minimum diameter and a maximum diameter. The difference between said maximum diameter and said minimum diameter is advantageously about 30mm. Preferably, the hooking elements 5 can be moved from the respective seat 50 towards the longitudinal axis L of the support device 1 in a radial direction of the support device 1. The radial direction of the support device 1 is advantageously lying on a plane transversal to said support device 1 and is orthogonal to the longitudinal axis L of said support device 1. Preferably, the hooking elements 5 are positioned with a minimum excursion, in case it is necessary to hook a component having a cross section of maximum diameter. Advantageously, the hooking elements 5 are positioned with a maximum excursion, in case it is necessary to hook a component having a cross section of minimum diameter. The difference between said maximum excursion and said minimum excursion is advantageously about 30mm. Preferably, the hooking elements 5 are positioned with an intermediate excursion, that is an excursion between the maximum and the minimum excursion, in case it is necessary to hook a component that has a cross section with a diameter comprised between the minimum and the maximum excursion.

Advantageously, the choice of the support group 2 depends on the diameter of the cross section of the component to be machined on the lathe 100. Preferably, it is possible to use a support group 2 which is adapted to hook and support a component having a cross section with a diameter for example comprised between 5mm and 35mm, or between 30mm and 60mm, or between 35mm and 65mm, or between 60mm and 90mm, or between 65mm and 95mm, and so on.

For example, if a component having a cross section with a diameter comprised between a minimum diameter of 5mm and a maximum diameter of 35mm is to be hooked, a specific support group 2 is used. Advantageously, said specific support group 2 comprises hooking elements 5 which are positioned with a minimum excursion in order to hook a component having a cross section with a diameter of 35mm, with a maximum excursion in order to hook a component having a cross section with a diameter of 5mm, and with intermediate excursion in order to hook a component having a cross section with a diameter comprised between 3mm and 35mm.

In some embodiments it is possible to use a plurality of support groups 2 on the same support device 1. Preferably, said support groups 2 can be of the same type, for example support groups 2 adapted to receive a component with cross section comprised between 30mm and 60mm. Alternatively, said support groups 2 can be of a different type, for example there may be a first support group 2 adapted to hook and support a first portion of the component and a second support group 2 adapted to hook and support a second portion of the component. Advantageously, said first portion can have a narrower cross section than that of said second portion, for example the first portion can have a cross section comprised between 30mm and 60mm and the second portion can have a cross section comprised between 60mm and 90mm. The embodiment which envisages the use of support groups 2 of a different type is particularly useful if it is necessary to hook and support a component having a cross section with a diameter comprised between a maximum diameter and a minimum diameter, where the difference between such maximum diameter and minimum diameter is greater than 30mm, i.e. greater than the difference between the maximum excursion and the minimum excursion of the hooking elements 5.

Advantageously, the hooking elements 5 can be moved with an accuracy of a tenth of a millimetre.

Preferably, each hooking element 5 is rotatable on a respective element axis E, each element axis E being substantially parallel to the longitudinal axis L of the support device 1 and being spaced apart from said longitudinal axis L.

Advantageously, the element axes E of the hooking elements 5 are equidistant from the longitudinal axis L of the support device 1 along the radial direction. Preferably, each hooking element 5 comprises a first end 51 and a second end 52 which are opposite each other. Advantageously, when the hooking element 5 is in the operating position O, the first end 51 is in the cavity 21 of the body 20 of the support group 2 while the second end 52 does not protrude into said cavity 21.

Preferably, each element axis E passes through a portion 53 of the respective hooking element 5. Advantageously, said portion 53 is located in proximity to the second end 52 of said hooking element 5.

Advantageously, the transmission 4 comprises a crown 40 and a pinion 60. Preferably, the crown 40 is mounted on the body 20 of the support group 2. Advantageously, the crown 40 is actuatable by the pinion 60. Preferably, the pinion 60 is in turn actuatable by means of the gearmotor 30. Advantageously, the crown 40 is adapted to move the hooking elements 5 between the operating position O and the rest position R.

Preferably, the pinion 60 extends longitudinally along a pinion axis P. Advantageously, the pinion axis P is parallel to the longitudinal axis L of the support device 1.

In a preferred embodiment, the transmission 4 can advantageously comprise an end pinion 61, adapted to mesh with the crown 40, and an intermediate pinion 64, adapted to bring the motion from the gearmotor 30 to the end pinion 61. Advantageously, the transmission 4 may comprise further elements, for example toothed wheels, which connect an output shaft 230 of the gearmotor 30 to the pinion 40, even more preferably to the intermediate pinion 64.

In a preferred embodiment, the support device 1 comprises a plurality of support groups 2.

Preferably, there are at least two support groups 2 so as to support the component to be turned in at least two mutually distinct portions. This makes it possible to advantageously increase the stability of the connection between said component and support device 1. Advantageously, the support groups 2 are aligned along the longitudinal axis L of the support device 1. Preferably, each support group 2 can be connected to a respective pinion 60: for example if there are three support groups 2, the first support group 2 is connected to the pinion 60, the second support group 2 is connected to a second pinion 60 and the third support group 2 is connected to a third pinion 60. Preferably, the pinions 60 extend, parallel to each other, longitudinally along the respective pinion axis P. Advantageously, the second pinion 60 comprises a second end pinion 62 and a second intermediate pinion 65. Preferably, the third pinion 60 comprises a third end pinion 63 and a third intermediate pinion 66.

Preferably, the body 20 of the support group 2 comprises a pinion hole 22 that passes through and extends longitudinally along the pinion axis P. Preferably, the pinion hole 22 is adapted to receive the pinion 60, even more preferably the end pinion 61, 62, 63. Advantageously, the body 20 of the support group 2 may comprise further pinion holes 22 adapted to receive further pinions 60. This may be useful if said support group 2 is interposed between the assembly 3 and another support group 2: in this case, the further pinion holes 22 will receive an intermediate pinion which will then connect with the end pinion connected to the crown 40 of another support group 2 that is farther away than the assembly 3.

Preferably, the crown 40 simultaneously moves all the hooking elements 5 of a support group 2. This allows to obtain a particularly uniform grip on the component to be turned.

Preferably, the crown 40 extends longitudinally along an axis substantially coincident with the longitudinal axis L of the device 1.

Advantageously, the crown 40 comprises a cavity which extends along a longitudinal extension of the crown 40, so that the component can slide longitudinally along the crown through said cavity. Advantageously, said cavity has a transverse extension substantially corresponding to that of cavity 21 of the body 20 of the support group 2.

Preferably, the crown 40 comprises a toothed portion 42 adapted to mesh with the pinion 60, even more preferably with the end pinion 61, 62, 63.

Preferably, each hooking element 5 is connected to the crown 20 by means of a respective plug 25. Advantageously, the rotation of the crown 40 displaces each plug 25 into a respective track 24 obtained on the body 20 of the support group 2. Preferably, the displacement of said plug 25 moves the respective hooking element 5 between the rest position R and the operating position O.

Advantageously, the plug 25 extends longitudinally along the element axis E, then parallel to the longitudinal axis L of the support device 1. Preferably, the plug 25 is cylindrical. Preferably, the plug 25, sliding in the track 24, moves the hooking element 5 associated therewith. Advantageously, the track 24 has a substantially arched or involute shape or with a rounded slot. Preferably, the track 24 passes through the whole longitudinal extension of the body 20.

Advantageously, the hooking element 5 has a through hole adapted to receive the respective plug 25. Preferably, the through hole is obtained in the portion 53 of the hooking element 5 in proximity to the second end 52 of said hooking element 5. In an alternative embodiment, the hooking element 5 and the plug 25 can advantageously be a single piece.

Advantageously, the crown 40 comprises a slot 41 adapted to receive the plug 25 combined with each hooking element 5. Preferably, the slot 41 is shaped to allow the plug 25 to move along the radial direction of the support device 1.

The slot 41 advantageously extends in the radial direction of the support device 1. The slot 41 is preferably elliptical in shape.

Advantageously, the plug 25, and therefore the hooking element 5 associated with it, is moved by the crown 40 both radially in the slot 41, and along the direction, for example in an arc, defined by the track 24 obtained on the body 20.

Preferably, each hooking element 5, between the rest position R and the operating position O, performs a movement consisting of: rotation around its element axis E, displacement of its element axis E along the direction defined by the track 24 obtained on the body 20, translation in the radial direction of its own element axis E in the slot 41.

Advantageously, the crown 40 comprises a blocking portion 43 adapted to limit the longitudinal movement of the plug 25 along the longitudinal axis L of the support device 1.

Preferably, the blocking portion 43 has a housing 44 adapted to receive a portion of the plug 25. Advantageously, said portion is placed in proximity to one end of said plug 25.

Preferably, the support group 2 comprises a further crown 40 mounted on the body 20 of the support group 2 and opposite to the crown 40 with respect to said body 20 of the support group 2, each crown 40 being actuatable by the pinion 60. Preferably, the pinion 60, even more preferably the end pinion 61, 62, 63, is adapted to rotate at least one of the two opposite crowns 40 of a support group 2. Advantageously, the pinion 60, even more advantageously the end pinion 61, 62, 63 is adapted to rotate both the two opposite crowns of a support group 2. Advantageously, both crowns 40 simultaneously move the hooking elements 5 of a support group 2. The Applicant has found that by using two opposite crowns 40 it is advantageously possible to obtain a particularly effective movement of the hooking elements 5. Thanks to the two opposite crowns 40 it is advantageously possible to stress the two ends of the plug 25 substantially simultaneously. This makes it possible not to unbalance the plug 25 itself and to obtain a particularly smooth movement of the hooking elements 5.

Advantageously, each crown 40 of a support group 2 comprises a blocking portion 43. Preferably, each blocking portion 43 is adapted to receive in its housing 44 opposite portions of a respective plug 25. This limits the longitudinal sliding of the plug 25 in both directions. Preferably, the plug 25 is interposed between the blocking portion 43 of each crown 40. The plug 25 advantageously abuts against each blocking portion 43 in such a way that it can be longitudinally blocked by said blocking portions 43.

In the embodiments in which only one crown 40 is provided for each support group 2, it can advantageously be provided to block the sliding of the respective plug 25 through the blocking portion 43 of the crown 40 and through the body 20 of the support group 2, for example with a shoulder obtained in the hole of said body 20. In this case, the hole in the body 20 which receives the plug 25 advantageously comprises only one opening on the side of the crown 40. Advantageously, the embodiment with a single crown 40 is cheaper, but less efficient in moving the hooking elements 5 than the embodiment with two opposite crowns 40.

Preferably, the hooking elements 5 are positioned in the body 20 so as to be equidistant from each other. Equidistant means that successive hooking elements 5 are advantageously spaced apart by the same first angle α. Preferably, successive hooking elements 5 means circumferentially successive hooking elements 5.

Preferably, said first angle α is comprised between a first plane and a second plane. Advantageously, said first plane is defined by the element axis E of a hooking element 5 of said successive hooking element 5 and by the longitudinal axis L of the support device 1. Preferably, said second plane is defined by the element axis E of the other hooking element 5 of said successive hooking element 5 and by the longitudinal axis L of the support device 1.

In a preferred embodiment of the invention, there are three hooking elements 5. In this case the first angle α is equal to about 120°.

Preferably, the transmission 4 comprises a plurality of pinions 60 positioned so as to be equidistant from each other. Equidistant means that successive pinions 60 are advantageously spaced apart by the same second angle β. Preferably, successive pinions 60 means circumferentially successive pinions 60.

Preferably, said second angle β is comprised between a third plane and a fourth plane. Advantageously, said third plane is defined by the pinion axis P of a pinion 60 of said successive pinions 60 and by the longitudinal axis L of the support device 1. Preferably, said fourth plane is defined by the pinion axis P of the other pinion 60 of said successive pinions 60 and by the longitudinal axis L of the support device 1.

In a preferred embodiment of the invention, there are three pinions 60. In this case the second angle β is equal to about 120°.

Advantageously, the hooking elements 5 have a hook shape.

Said shape allows a particularly firm grip of the component. In other embodiments, hooking elements 5 can be advantageously provided for with a cam, tooth shape, etc.

Preferably, the hooking elements 5 have the same shape and size. This allows the component to be hooked in a particularly secure manner.

Preferably, each seat 50 of the body 21 of the support group 20 has a shape complementary to that of the respective hooking element 5.

This can be useful for limiting the transverse extension of the support group 2, in particular of the body 20 of the support group 2. Said transverse extension is in fact limited by the transverse extension of the hollow shaft 121 of the spindle 120 of the lathe 100 on which the support device 1 is mounted.

Advantageously, the support device 1 comprises a plurality of support groups 2 spaced apart along the longitudinal axis L of the support device 1 and a spacer 6 interposed between two successive support groups 2 and coupled to said two successive support groups 2. Advantageously, said spacer 6 comprises a body 67 extending along the longitudinal axis L and having a cavity 68 adapted to receive the component to be machined.

Preferably, the spacers 6 are placed inside the hollow shaft 121 of the spindle 120 of the lathe 100. The spacers 6 are advantageously arranged in series along the longitudinal axis L of the support device 1. Preferably, the main function of the spacers 6 is that of connecting and spacing apart two successive support groups 2 from each other. Advantageously, the spacers 6 make it possible to make the support device 1 modular: depending on the longitudinal extension of the hollow shaft 121 of the spindle 120, it is possible to insert within said hollow shaft 121 a suitable number of spacers 6 interposed between successive support groups 2. In some embodiments, an adequate number of spacers 6 is used to substantially cover the whole longitudinal extension of the hollow shaft 121 of the spindle 120. Preferably, the spacers 6 are completely contained within the hollow shaft 121 of the spindle 120. In some embodiments, it may occur that the body 67 of the spacer 6 closest to the turning area 140 may slightly protrude into said turning area 140. The longitudinal extension of the hollow shaft 121 of the spindle 120 changes according to the lathe 100 on which the support device 1 is mounted: the greater this extension, the greater the number of spacers and relative support groups 2 that can be inserted into the hollow shaft 121 of the spindle 120 of the lathe 100.

Advantageously, the body 67 of the spacer 6 extends longitudinally along the longitudinal axis L of the support device 1. Preferably, said body 67 is advantageously cylindrical in shape. Advantageously, the cavity 68 extends longitudinally along the longitudinal axis L of the support device 1, so that the component can slide longitudinally along the spacer 6 through said cavity 68. Advantageously, said cavity 68 has a transverse extension substantially corresponding to that of cavity 21 of the body 20 of the support group 2. The cavity 68 of the spacer 6 is advantageously cylindrical in shape. Preferably, the body 67 of the spacer 6 is adapted to support the transmission 4, in particular the pinion 60 of the transmission 4. The body 67 of the spacer 6 advantageously has lightening openings.

Preferably, each support group 2 is connected to an end 69 of the body 67 of the spacer 6. Therefore, it is advantageously provided that there is a support group 2 connected to each end 69 of the body 67 of the spacer 6. The body 67 of the spacer 6 is therefore preferably interposed between two successive support groups 2. The support groups 2 connected to the spacers 6 are advantageously arranged in series along the longitudinal axis L of the support device 1. Preferably, a spacer 6 is connected to the assembly 3 through the first flange 34.

Advantageously, the hooking elements 5 of each support group 2 are displaced by the transmission 4 between the rest position R and the operating position O in a simultaneous manner.

Preferably, each support group 2 is adapted to support a different portion of the component to be machined. This allows to further limit the oscillations of the component, since a plurality of portions of said component is constrained by means of the support device 1. This improves the stability of the component during turning machinings.

It is advantageously possible to use different support groups 2 on the same support device 1, in particular if the component to be machined on the lathe 100 comprises portions having cross sections with different diameters between them. For example, it is advantageously possible to mount on the support device 1 a first support group 2, adapted to hook and support a first portion of a component having a cross section with a diameter comprised between 5mm and 35mm, and a second support group 2, adapted to hook and support a second portion of said component having a cross section with a diameter comprised between 35mm and 65mm.

The component is configured as a bar.

Advantageously, the bar can have a longitudinal extension comprised between about 3m and 6m. In this case, the bar is advantageously inserted into the hole 33 of the assembly 3 from the second opening 32 of said hole 33. The component inserted in said second opening 32 is preferably pushed longitudinally along said hole 33 and reaches the first opening 31 and subsequently the support group 2. Advantageously, the component is further pushed longitudinally so as to slide in the spacer 6, if any, until an initial portion thereof protrudes from the driving head 150 of the lathe 100 in the turning area 140. Depending on the longitudinal extension of the component, it is advantageously possible to hook different portions of the component by means of a plurality of support groups 2 placed at the ends of the spacer 6. Depending on the length of the hollow shaft 121 of the spindle 120, a suitable number of spacers 6 can be used in a modular manner.

During the machining of said initial portion of the component in the turning area 140, the hooking elements 5 are preferably in the operating position O and cooperate with the gripping elements of the spindle 120, also positioned to hook and support the component, to support and drive the component into rotation.

After the turning operations on said initial portion have been completed, the component is advantageously advanced along the longitudinal axis L of the support device 1 so that a successive portion of the component exits the driving head 150 of the lathe 100 in the turning area 140. Advantageously, when the component is to be advanced along the longitudinal axis L of the support device 1 both the hooking elements 5 and the gripping elements of the spindle 120 are spaced away from the component.

As for the initial portion, during the machining of said successive portion of the component, the hooking elements 5 are preferably in the operating position O and cooperate with the gripping elements of the spindle 120, which are also positioned so as to hook the component, in order to support and drive the component into rotation.

It is therefore advantageously possible to machine successive portions of the component in series in the turning area 140. This is particularly advantageous if the component has a predominantly longitudinal extension, such as when it is shaped like a bar.

In the event that the component is not configured as a bar, in particular in the event that the component has a limited longitudinal extension, it is advantageously possible to insert said component from the side of the turning area 140 within the hollow shaft 121 of the spindle 120 of the lathe 100. This is advantageously dependent on a machine clearance, i.e. the distance between the spindle 120 of the lathe 100 and a tailstock (or counter-spindle) of said lathe 100. If the longitudinal extension of the component conforms to the machine clearance, it is advantageously possible to insert said component from the side of the turning area 140. In this case, the component is preferably slid longitudinally within said hollow shaft 121 so as to slide into the cavity 21 of the body 20 of the support group 2 and possibly into the cavity 68 of the body 67 of the spacer 6. Depending on the longitudinal extension of the component, it is advantageously possible to hook different portions of the component by means of a plurality of support groups 2 placed at the ends of the spacer 6. Depending on the length of the hollow shaft 121 of the spindle 120, a suitable number of spacers 6 can be used in a modular manner. Optionally, a portion of the component may advantageously slide into the hole 33 of the assembly 3 through the first opening 31 of said hole 33. In certain embodiments, for example if the support device 1 is to be used exclusively for non-bar lathes, it may be envisaged that the hole 33 is advantageously blind, i.e. it does not extend along the whole longitudinal extension of the assembly 3. In this case, the component can only be slid into the hollow shaft 121 of the spindle 120 by inserting it from the side of the turning area 140.

The support device 1 is therefore particularly versatile because it can be combined with various types of lathe, for example a parallel lathe or a bar lathe. The support device 1 is particularly flexible in that it offers the possibility of receiving the component to be machined within the hollow shaft 121 of the spindle 120 of the lathe 100 both through the first opening 31 of the hole 33 of the assembly 3 and from the side of the turning area 140.

Preferably, the end part 80 of the support device 1 is connected to the support group 2 which is further away than the assembly 3. Advantageously, said support group 2 which is further away from the assembly 3 is interposed between the body 67 of the spacer 6 and the end part 80. Preferably, the contact element 81 is in direct contact with the hollow shaft 121 of the spindle 120, so that the support group 2 and/or the body 67 of the spacer 6 may not come into contact with the hollow shaft 121 of the spindle 120. This allows to avoid possible damages due to rubbing between the support group 2 and the spindle 120 and/or between the body 67 of the spacer 6 and the spindle 120. Preferably, the end piece 80 helps to further limit the vibrations of the support device 1. Preferably, the body 20 of the support group 2 comprises a protruding portion 23. Advantageously, the body 20 of the support group 2 comprises a resting portion 27 extending between said protruding portion 23 and an outer surface 128 of the body 20. Preferably, said resting portion 27 is adapted to abut against the end 69 of the body 67 of the spacer 6 or the end part 80. Advantageously, said resting portion 27 can serve as a guide for the crown 40, limiting its transverse displacement.

Advantageously, the gearmotor 30 integrated in the assembly 3 is of the electro-mechanical type. The assembly 3 can preferably comprise more than one gearmotor 30, each gearmotor 30 being combinable with a pinion 60 combined with a respective support group 2. Alternatively, it may be advantageous to have a single gearmotor 30 connected, for example by means of toothed wheels, to different pinions 60 combined to respective support groups 2.

Preferably, the support device 1 comprises an interface device 7 adapted to interact with an electronic control system of the lathe 100 so as to control the movement of the hooking elements 5 on the basis of the diameter of the cross section of the component to be machined on the lathe 100. Advantageously, the electronic control system of the lathe 100 is adapted to control the actuation of the gearmotor 30.

Advantageously, the interface device 7 is positioned on the assembly 3. Preferably, the interface device 7 comprises a connector 71. Advantageously, the electronic control system of the lathe 100 is of the CNC (Computerized Numerical Control) or PLC (Programmable Logic Controller) type.

The interface device 7 allows an easy connection to be made between the support device 1 and the electronic control system of the lathe 100.

Preferably, the electronic control system of the lathe 100, when the gripping elements of the spindle 120 are moved away from the component, commands the displacement in the rest position R of the hooking elements 5 of the support group 2. Advantageously, the electronic control system of the lathe 100, when the gripping elements of the spindle 120 are moved towards the component so as to hook a portion thereof, commands the displacement of the hooking elements 5 of the support group 2 to the operating position O.

Preferably, the support device 1 comprises a movement device 200 adapted to configure the support device 1 in a distancing configuration, in which the gearmotor 30 is not connected to the pinion 60, and a nearing position, in which the gearmotor 30 is connected with the pinion 60.

Advantageously, when the support device 1 is in the nearing configuration, a pinion 203 integral with the output shaft 230 of the gearmotor 30 meshes with the pinion 60, in particular with the intermediate pinion 64, 65, 66, of the transmission 4. Preferably, when the support device 1 is in the distancing configuration, the pinion 203 integral with the output shaft 230 of the gearmotor 30 is moved away from the pinion 60.

Preferably, the movement device 200 is included in the assembly 3. Advantageously, the movement device 200 comprises a plate 201, a movement element 202 and a guide bar 37.

Preferably, the plate 201 is substantially disc-shaped. Advantageously, the plate 201 is entirely located within the assembly 3. Advantageously, the transverse extension of the plate 201 is substantially equal to that of the assembly 3. Preferably, the plate 201 can translate longitudinally by means of the movement element 202.

Advantageously, said translation has a fixed stroke.

Preferably, the movement element 202 may be configured as a pneumatic piston. There are advantageously three movement elements 202 equidistant from each other, preferably separated by an angle of 120°. Preferably, a portion of said movement element 202 is connected to the plate 201, so that actuating the movement element 202 results in a translation of the plate 201. Advantageously, the gearmotors 30 are mounted integrally with said plate 201, so they can translate with said plate 201.

Advantageously, the guide bar 37 is adapted to guide the displacement of the plate 201 in the longitudinal direction.

Preferably, in the nearing position, the first flange 34 cannot be brought into rotation by the spindle 120, while in the distancing position, the first flange 34 can be brought into rotation by the spindle 120.

Advantageously, it is possible to control the movement device 200 by means of the electronic control system of the lathe 100.

Preferably, the support device 1 comprises a blocking device 300 adapted to block the rotation of the pinion 60, when the support device 1 is in the distancing configuration, and to allow the rotation of the pinion 60, when the support device 1 is in the nearing configuration.

Advantageously, the blocking device 300 is adapted to block or allow rotation of the intermediate pinion 64, 65, 66.

When the support device 1 is configured in the distancing position, the end of the pinion 60 which was previously connected to the gearmotor 30 is free. It may happen that said free end turns idle due to the stresses of the lathe 100 and in some cases there may also be a loosening of the grip of the hooking elements 5 on the component. To solve this problem, the blocking device 300 advantageously blocks the rotation of the pinion 60 when the support device 1 is configured in the distancing position.

Preferably, the blocking device 300 comprises a sliding pin 301, an elastic element 330, a spherical element 310 and a friction element 320.

Advantageously, the sliding pin 301 comprising a conical portion 302 which by action of the elastic element 330 tends to push the spherical element 310. Preferably, the elastic element 330 is configured as a helical spring wound around the sliding pin 301. Preferably, the friction element 320 is configured as a pad, even more preferably of bronze.

When the support device 1 is configured in the distancing position, the spring element 330 advantageously pushes the sliding pin 301 in the longitudinal direction. Preferably, the conical portion 302 consequently pushes the spherical element 310 in the transverse direction. The spherical element 310 translating in said transverse direction pushes the friction element 320 which in turn acts on the pinion 60, holding it stationary by friction.

On the other hand, when the support device 1 is configured in the nearing position, the plate 201 of the movement device 200 advantageously pushes the sliding pin 201 in the opposite direction, overcoming the resistance of the elastic element 330. In this way, the spherical element 310 is no longer stressed in the transverse direction by the sliding pin 201 and the pinion 60 is free to rotate.

Preferably, the support device 1 comprises a clutch device 400 adapted to make the gearmotor 30 slip after the hooking elements 5 come into contact with the component to be machined on the lathe 100. Advantageously, the gearmotor 30 is deactivated after a certain period of time has elapsed since the gearmotor 30 starts slipping.

Advantageously, the clutch device 400 is included in the gearmotor 30. Preferably, the clutch device 400 is interposed between the output shaft 230 of the gearmotor 30 and the pinion 203 integral with the output shaft 230 of the gearmotor 30 which meshes with the pinion 60. When the movement device 200 is in the nearing position, the pinion 203 integral with the output shaft 230 of the gearmotor 30 meshes with the pinion 60, in particular with the intermediate pinion 64, 65, 66, of the transmission 4.

Preferably, the clutch device 400 is actuated when the hooking elements 5 are in the operating position O. Advantageously, when the hooking elements 5 come into contact with the component, the clutch device 400 is activated. Preferably, the hooking elements 5, on encountering the resistance due to the presence of the component to be turned, interrupt their excursion towards the longitudinal axis L. Consequently, when the hooking elements 5 come into contact with the component, the pinion 60 of the transmission 4 stops its rotation, as does the pinion 203 integral with the output shaft 230 of the gearmotor 30. On the contrary, when the hooking elements 5 come into contact with the component, the output shaft 230 of the gearmotor 30 continues its rotation. The clutch device 400 is consequently made to slip since it is located between the pinion 203, which is stationary, and the output shaft 230, which rotates. After the clutch device 400 has slipped for a certain period of time, the gearmotor 30 is advantageously deactivated. Preferably, the gearmotor 30 is deactivated by the electronic control system of the lathe 100. Preferably, after the gearmotor 30 is deactivated, the support device 1 is configured in the distancing configuration by means of the movement device 200.

The clutch device 400 advantageously allows to adapt the excursion of the hooking elements 5 on the basis of the diameter of the cross section of the component to be turned, so as to obtain zero play between said component and said hooking elements 5. The clutch device 400 advantageously allows preventing the support device 1 from undergoing damages caused by failure to hook a component to be turned: said failed hooking may for example be due to a cross section of said component having an effective diameter different from the nominal diameter, for example due to inaccurate manufacturing tolerances. Advantageously, it is possible to control the clutch device 400 by means of the electronic control system of the lathe 100.

According to another aspect of the invention, there is provided a lathe 100 comprising the support device 1 and a spindle 120 adapted to hook and support a portion of the component longitudinally spaced apart with respect to the portion of the piece hooked by the support group 2.

Preferably, said lathe 100 is of the parallel or bar type. Advantageously, the lathe 100 is of the numerically controlled type. Advantageously, it is possible to combine the support device 1 to the lathe 100 by retrofitting.

Advantageously, the lathe 100 comprises a bar pushing device 110 adapted to insert the component to be machined into the support device 1 coupled to the lathe 100.

The bar pushing device 110 is advantageously used in the case in which the lathe 100 is a bar lathe. In this case, the hole 33 of the assembly 3 is advantageously passing through, so that a component configured as a bar can be inserted from the second opening 32 of the hole 33 of said assembly 3.

Preferably, in applications in which the bar pushing device 110 is present, the support device 1 allows the component and a bar pushing lance to be simultaneously supported within the hollow shaft 121 of the spindle 120 of the lathe 100.

The invention thus solves the proposed problem while achieving multiple benefits. In particular, the support device 1 makes it possible to eliminate the play between the hooking elements 5 and the component, thereby also managing to reduce or completely eliminate the problem of vibrations due to oscillations of the component caused by said play. The support device is capable of adapting to different diameters of respective portions of the component to be turned. In addition, the spindle and the support device 1 hook different portions of the component, so as to achieve a synergistic effect that contributes to decreasing the oscillations of the component while hooking and supporting said component during machining on the lathe 100. The support device 1 is particularly flexible in that it offers the possibility of receiving the component to be machined within the hollow shaft 121 of the spindle 120 of the lathe 100 both through the first opening 31 of the hole 33 of the assembly 3 and from the side of the turning area 140. The support device 1 is therefore particularly versatile because it can be combined with various types of lathe, for example a parallel lathe or a bar lathe.

## Claims

1. Support device (1) combinable with a spindle (120) of a lathe (100), comprising:
a support group (2) suitable for hooking and supporting a component, configured as a bar, to be machined on said lathe (100);
said support group (2) comprising:
a body (20) comprising a cavity (21) suitable for receiving the component and extending longitudinally so as to define two opposite and aligned inlets (28) along a longitudinal axis (L) of the support device (1); the support device being **characterized by** the fact that it comprises an assembly (3) suitable for coupling the support device (1) to the lathe (100) and comprising a gearmotor (30)
suitable for actuating the support group (2);
a transmission (4) suitable for transferring the motion from the gearmotor (30) to the support group (2); and
hooking elements (5) being comprised by said support group, that can be displaced by means of the transmission (4) between a rest position (R), wherein said hooking elements (5) are positioned in respective seats (50) obtained on the body (20) of the support group (2), and an operating position (O), wherein said hooking elements (5) are displaced outside said respective seat (50) towards the cavity (21) so as to project into said cavity (21) in order to hook and support the component to be machined on said lathe (100).

2. Support device (1) according to the preceding claim, wherein each hooking element (5) is rotatable on a respective element axis (E), each element axis (E) being substantially parallel to the longitudinal axis (L) of the support device (1) and spaced apart with respect to said longitudinal axis (L).

3. Support device (1) according to any one of the preceding claims, wherein the transmission (4) comprises a crown (40) and a pinion (60), said crown (40) being mounted on the body (20) of the support group (2) and being actuatable by said pinion (60), which is in turn actuatable by means of the gearmotor (30), said crown (40) being suitable for moving the hooking elements (5) between the operating position and the rest position.

4. Support device (1) according to the preceding claim, wherein each hooking element (5) is connected to the crown (40) by means of a respective plug (25), so that the rotation of said crown (40) moves each plug (25) in a respective track (24) obtained on the body (20) of the support group (2) and that the displacement of said plug (25) moves the respective hooking element (5) between the rest position and the operating position.

5. Support device (1) according to the preceding claim, wherein the crown (40) comprises a slot (41) suitable for receiving the plug (25) combined with each hooking element (5), said slot (41) being shaped so as to allow the plug (25) to move along a radial direction of the support device (1) and wherein the crown (40) preferably comprises a blocking portion (43) suitable for limiting the longitudinal movement of the plug (25) along the longitudinal axis (L) of the support device (1).

6. Support device (1) according to any one of claims 3 to 5, wherein the support group (2) comprises a further crown (40) mounted on the body (20) of the support group (2) and opposite the crown (40) with respect to said body (20) of the support group (2), each crown (40) being actuatable by the pinion (60).

7. Support device (1) according to any one of the preceding claims, wherein the hooking elements (5) are positioned in the body (20) of the support group (2) so as to be equidistant from each other, wherein the hooking elements (5) have preferably a hook shape.

8. Support device (1) according to any one of the preceding claims, wherein each seat (50) of the body (20) of the support group (2) has a shape complementary to that of the respective hooking element (5).

9. Support device (1) according to any one of the preceding claims, comprising a plurality of support groups (2) spaced apart along the longitudinal axis (L) of the support device (1) and a spacer (6) interposed between two successive groups (2) and coupled to said two successive support groups (2), said spacer (6) comprising a body (67) extending along the longitudinal axis (L) and having a cavity (68) suitable for receiving the component to be machined.

10. Support device (1) according to any one of the preceding claims, comprising an interface device (7) suitable for interacting with an electronic control system of the lathe (100) so as to control the movement of the hooking elements (5) according to a diameter of a cross section of the component to be machined on the lathe (100).

11. Support device (1) according to any one of claims 3 to 6 or to any one of claim 7 to 10 when appended to any one of claims 3-6, comprising a movement device (200) suitable for configuring the support device (1) in a distancing configuration, in which the gearmotor (30) is not connected to the pinion (60), and a nearing position, in which the gearmotor (30) is connected to the pinion (60).

12. Support device (1) according to the preceding claim, comprising a blocking device (300) suitable for blocking the rotation of the pinion (60), when the support device (1) is in the distancing configuration, and for allowing the rotation of the pinion (60), when the support device (1) is in the nearing configuration.

13. Support device (1) according to any one of the preceding claims, comprising a clutch device (400) suitable for making the gearmotor (30) slip after the hooking elements (5) come into contact with the component to be machined on the lathe ( 100) and until said gearmotor (30) is deactivated after a certain period of time has elapsed since when said gearmotor (30) starts slipping.

14. Lathe (100) comprising a support device (1) according to any one of the preceding claims and a spindle (120) suitable for hooking and supporting a portion of the component longitudinally spaced apart with respect to the portion of the piece hooked by the support group (2).

15. Lathe (100) according to the preceding claim, comprising a bar pushing device (110) suitable for inserting the component to be machined in the support device (1) coupled to the lathe (100).

## Patentansprüche

1. Stützvorrichtung (1), die mit einer Spindel (120) einer Drehmaschine (100) kombinierbar ist, umfassend:
- eine Stützgruppe (2), die zum Einhängen und Abstützen eines auf der Drehmaschine (100) zu bearbeitenden, als Stange ausgebildeten Werkstücks geeignet ist;
- wobei die Stützgruppe (2) aufweist:
- einen Körper (20) mit einem Hohlraum (21), der zum Aufnehmen des Werkstücks geeignet ist und sich in Längsrichtung erstreckt, um zwei gegenüberliegende und ausgerichtete Einlässe (28) entlang einer Längsachse (L) der Stützvorrichtung (1) zu bilden;
- wobei die Stützvorrichtung **dadurch gekennzeichnet ist, dass** sie eine Anordnung (3) aufweist, die zum Verbinden der Stützvorrichtung (1) mit der Drehmaschine (100) geeignet ist und einen Getriebemotor (30) aufweist, der zum Antreiben der Stützgruppe (2) geeignet ist;
- ein Getriebe (4), das zum Übertragen der Bewegung vom Getriebemotor (30) auf die Stützgruppe (2) geeignet ist; sowie
- von der Stützgruppe umfasste Hakenelemente (5), die mittels des Getriebes (4) zwischen einer Ruheposition (R), in der die Hakenelemente (5) in jeweiligen Aufnahmen (50), die im Körper (20) der Stützgruppe (2) enthalten sind, positioniert sind, und einer Betriebsposition (0) verschoben werden können, in der die Hakenelemente (5) aus der jeweiligen Aufnahme (50) heraus in Richtung des Hohlraums (21) verschoben sind, um in den Hohlraum (21) hineinzuragen, um das auf der Drehmaschine (100) zu bearbeitende Werkstück einzuhaken und zu stützen.

2. Stützvorrichtung (1) nach dem vorhergehenden Anspruch, wobei jedes Hakenelement (5) um eine jeweilige Elementachse (E) drehbar ist, wobei jede Elementachse (E) im Wesentlichen parallel zur Längsachse (L) der Stützvorrichtung (1) verläuft und in Bezug auf die Längsachse (L) beabstandet ist.

3. Stützvorrichtung (1) nach einem der vorhergehenden Ansprüche, wobei das Getriebe (4) ein Kronrad (40) und ein Ritzel (60) aufweist, wobei das Kronrad (40) am Körper (20) der Stützgruppe (2) montiert und durch das Ritzel (60) betätigbar ist, welches wiederum mittels des Getriebemotors (30) betätigbar ist, wobei das Kronrad (40) geeignet ist, um die Hakenelemente (5) zwischen der Betriebsposition und Ruheposition zu bewegen.

4. Stützvorrichtung (1) nach dem vorhergehenden Anspruch, wobei jedes Hakenelement (5) mit dem Kronrad (40) mittels eines jeweiligen Zapfens (25) verbunden ist, sodass die Drehung des Kronrads (40) jeden Zapfen (25) in einer jeweiligen Bahn (24) bewegt, die im Körper (20) der Stützgruppe (2) enthalten ist, und dass die Verschiebung des Zapfens (25) das jeweilige Hakenelement (5) zwischen der Ruheposition und Betriebsposition bewegt.

5. Stützvorrichtung (1) nach dem vorhergehenden Anspruch, wobei das Kronrad (40) einen Schlitz (41) aufweist, der zum Aufnehmen des Zapfens (25) in Kombination mit jedem Hakenelement (5) geeignet ist, wobei der Schlitz (41) geformt ist, um dem Zapfen (25) zu ermöglichen, sich entlang einer radialen Richtung der Stützvorrichtung (1) zu bewegen, und wobei das Kronrad (40) vorzugsweise einen Sperrabschnitt (43) aufweist, der geeignet ist, um die Längsbewegung des Zapfens (25) entlang der Längsachse (L) der Stützvorrichtung (1) zu begrenzen.

6. Stützvorrichtung (1) nach einem der Ansprüche 3 bis 5, wobei die Stützgruppe (2) ein weiteres Kronrad (40) aufweist, das am Körper (20) der Stützgruppe (2) montiert ist und dem Kronrad (40) in Bezug auf den Körper (20) der Stützgruppe (2) gegenüberliegt, wobei jedes Kronrad (40) durch das Ritzel (60) betätigbar ist.

7. Stützvorrichtung (1) nach einem der vorhergehenden Ansprüche, wobei die Hakenelemente (5) im Körper (20) der Stützgruppe (2) im gleichen Abstand voneinander positioniert sind, wobei die Hakenelemente (5) vorzugsweise eine Hakenform aufweisen.

8. Stützvorrichtung (1) nach einem der vorhergehenden Ansprüche, wobei jede Aufnahme (50) des Körpers (20) der Stützgruppe (2) eine zu der des jeweiligen Hakenelements (5) komplementäre Form aufweist.

9. Stützvorrichtung (1) nach einem der vorhergehenden Ansprüche, die eine Mehrzahl von Stützgruppen (2) aufweist, die entlang der Längsachse (L) der Stützvorrichtung (1) beabstandet sind, und einen Abstandshalter (6), der zwischen zwei aufeinanderfolgenden Gruppen (2) angeordnet und mit diesen beiden aufeinanderfolgenden Stützgruppen (2) verbunden ist, wobei der Abstandshalter (6) einen sich entlang der Längsachse (L) erstreckenden Körper (67 und einen Hohlraum (68) aufweist, der zum Aufnehmen des zu bearbeitenden Werkstücks geeignet ist.

10. Stützvorrichtung (1) nach einem der vorhergehenden Ansprüche, die eine Schnittstellenvorrichtung (7) aufweist, die geeignet ist, um mit einem elektronischen Steuerungssystem der Drehmaschine (100) zusammenzuwirken, um die Bewegung der Hakenelemente (5) entsprechend einem Durchmesser eines Querschnitts des auf der Drehmaschine (100) zu bearbeitenden Werkstücks zu steuern.

11. Stützvorrichtung (1) nach einem der Ansprüche 3 bis 6 oder nach einem der Ansprüche 7 bis 10 in Verbindung mit einem der Ansprüche 3 bis 6, die eine Bewegungsvorrichtung (200) aufweist, die geeignet ist, um die Stützvorrichtung (1) in eine Abstandsanordnung, in der der Getriebemotor (30) nicht mit dem Ritzel (60) verbunden ist, und eine Annäherungsposition zu bringen, in der der Getriebemotor (30) mit dem Ritzel (60) verbunden ist.

12. Stützvorrichtung (1) nach dem vorhergehenden Anspruch, die eine Sperrvorrichtung (300) aufweist, die geeignet ist, um die Drehung des Ritzels (60) zu sperren, wenn sich die Stützvorrichtung (1) in der Abstandsanordnung befindet, und die Drehung des Ritzels (60) zuzulassen, wenn sich die Stützvorrichtung (1) in der Annäherungsposition befindet.

13. Stützvorrichtung (1) nach einem der vorhergehenden Ansprüche, die eine Kupplungsvorrichtung (400) aufweist, die geeignet ist, um den Getriebemotor (30) Durchrutschen zu lassen, nachdem die Hakenelemente (5) mit dem auf der Drehmaschine (100) zu bearbeitendes Werkstück in Kontakt gekommen sind, und bis der Getriebemotor (30) deaktiviert wird, nachdem eine bestimmte Zeitspanne seit dem Beginn des Durchrutschens des Getriebemotors (30) verstrichen ist.

14. Drehmaschine (100) mit einer Stützvorrichtung (1) nach einem der vorhergehenden Ansprüche und einer Spindel (120), die geeignet ist, um einen Abschnitt des Werkstücks einzuhaken und zu stützen, der in Längsrichtung in Bezug auf den Abschnitt des Werkstücks, der von der Stützgruppe (2) eingehakt wird, beabstandet ist.

15. Drehmaschine (100) nach dem vorhergehenden Anspruch mit einer Stangenschiebevorrichtung (110), die geeignet ist, um das zu bearbeitendes Werkstück in die mit der Drehmaschine (100) verbundene Stützvorrichtung (1) einzusetzen.

## Revendications

1. Dispositif de support (1) pouvant être associé à une broche (120) d'un tour (100), comprenant :
un groupe de support (2) destiné à l'accrochage et au maintien d'un composant, configuré sous la forme d'une barre, devant être usiné sur ledit tour (100) ;
ledit groupe de support (2) comprenant :
un corps (20) comportant une cavité (21) adaptée pour recevoir le composant et s'étendant longitudinalement de manière à définir deux entrées opposées et alignées (28) le long d'un axe longitudinal (L) du dispositif de support (1) ;
le dispositif de support **se caractérisant en ce qu'**il comprend un ensemble (3) destiné à accoupler le dispositif de support (1) au tour (100) et comprenant un motoréducteur (30) destiné à actionner le groupe de support (2) ;
une transmission (4) permettant de transmettre le mouvement du motoréducteur (30) au groupe de support (2) ; et
des éléments d'accrochage (5) faisant partie dudit groupe de support, qui peuvent être déplacés au moyen de la transmission (4) entre une position de repos (R), dans laquelle lesdits éléments d'accrochage (5) sont positionnés dans des logements (50) respectifs formés sur le corps (20) du groupe de support (2), et une position de fonctionnement (O), dans laquelle lesdits éléments d'accrochage (5) sont déplacés hors dudit logement (50) respectif vers la cavité (21) de manière à faire saillie dans ladite cavité (21) afin d'accrocher et de supporter le composant à usiner sur ledit tour (100).

2. Dispositif de support (1) selon la revendication précédente, dans lequel chaque élément d'accrochage (5) peut tourner autour d'un axe d'élément (E) respectif, chaque axe d'élément (E) étant sensiblement parallèle à l'axe longitudinal (L) du dispositif de support (1) et espacé dudit axe longitudinal (L).

3. Dispositif de support (1) selon l'une quelconque des revendications précédentes, dans lequel la transmission (4) comprend une couronne (40) et un pignon (60), ladite couronne (40) étant montée sur le corps (20) du groupe de support (2) et pouvant être actionnée par ledit pignon (60), qui est lui-même actionnable au moyen du motoréducteur (30), ladite couronne (40) pouvant déplacer les éléments d'accrochage (5) entre la position de fonctionnement et la position de repos.

4. Dispositif de support (1) selon la revendication précédente, dans lequel chaque élément d'accrochage (5) est relié à la couronne (40) au moyen d'un pion (25) respectif, de sorte que la rotation de ladite couronne (40) déplace chaque pion (25) dans une glissière (24) respective pratiquée sur le corps (20) du groupe de support (2) et que le déplacement dudit pion (25) fait passer l'élément d'accrochage (5) respectif de la position de repos à la position de fonctionnement.

5. Dispositif de support (1) selon la revendication précédente, dans lequel la couronne (40) comprend une fente (41) adaptée pour recevoir le pion (25) associé à chaque élément d'accrochage (5), ladite fente (41) étant conformée de manière à permettre au pion (25) de se déplacer selon une direction radiale du dispositif de support (1) et dans lequel la couronne (40) comprend de préférence une partie de blocage (43) adaptée pour limiter le déplacement longitudinal du pion (25) le long de l'axe longitudinal (L) du dispositif de support (1).

6. Dispositif de support (1) selon l'une quelconque des revendications 3 à 5, dans lequel le groupe de support (2) comprend une autre couronne (40) montée sur le corps (20) du groupe de support (2) et située en face de la couronne (40) par rapport audit corps (20) du groupe de support (2), chaque couronne (40) pouvant être actionnée par le pignon (60).

7. Dispositif de support (1) selon l'une quelconque des revendications précédentes, dans lequel les éléments d'accrochage (5) sont positionnés dans le corps (20) du groupe de support (2) de manière à être équidistants les uns des autres, dans lequel les éléments d'accrochage (5) ont de préférence la forme d'un crochet.

8. Dispositif de support (1) selon l'une quelconque des revendications précédentes, dans lequel chaque logement (50) du corps (20) du groupe de support (2) présente une forme complémentaire de celle de l'élément d'accrochage (5) respectif.

9. Dispositif de support (1) selon l'une quelconque des revendications précédentes, comprenant une pluralité de groupes de support (2) espacés les uns des autres le long de l'axe longitudinal (L) du dispositif de support (1) et une entretoise (6) intercalée entre deux groupes successifs (2) et couplée auxdits deux groupes de support successifs (2), ladite entretoise (6) comprenant un corps (67) s'étendant le long de l'axe longitudinal (L) et comportant une cavité (68) adaptée pour recevoir le composant à usiner.

10. Dispositif de support (1) selon l'une quelconque des revendications précédentes, comprenant un dispositif d'interface (7) adapté pour interagir avec un système de commande électronique du tour (100) de manière à commander le mouvement des éléments d'accrochage (5) en fonction d'un diamètre d'une section transversale du composant à usiner sur le tour (100).

11. Dispositif de support (1) selon l'une quelconque des revendications 3 à 6 ou selon l'une quelconque des revendications 7 à 10 lorsqu'elle est dépendante de l'une quelconque des revendications 3 à 6, comprenant un dispositif de déplacement (200) permettant de configurer le dispositif de support (1) dans une configuration d'éloignement, dans laquelle le motoréducteur (30) n'est pas relié au pignon (60), et dans une position de rapprochement, dans laquelle le motoréducteur (30) est relié au pignon (60).

12. Dispositif de support (1) selon la revendication précédente, comprenant un dispositif de blocage (300) pouvant bloquer la rotation du pignon (60) lorsque le dispositif de support (1) se trouve dans la configuration d'éloignement, et permettre la rotation du pignon (60) lorsque le dispositif de support (1) est en configuration de rapprochement.

13. Dispositif de support (1) selon l'une quelconque des revendications précédentes, comprenant un dispositif d'embrayage (400) pouvant faire patiner le motoréducteur (30) après que les éléments d'accrochage (5) sont entrés en contact avec le composant à usiner sur le tour (100) et jusqu'à ce que ledit motoréducteur (30) soit désactivé après qu'un certain laps de temps s'est écoulé à compter du moment où ledit motoréducteur (30) commence à patiner.

14. Tour (100) comprenant un dispositif de support (1) selon l'une quelconque des revendications précédentes et une broche (120) pouvant accrocher et supporter une partie du composant, espacée longitudinalement par rapport à la partie de la pièce accrochée par le groupe de support (2).

15. Tour (100) selon la revendication précédente, comprenant un dispositif de poussée de barre (110) adapté pour insérer le composant à usiner dans le dispositif de support (1) couplé au tour (100).
